# EUROPEAN PATENT APPLICATION

(11) **EP 4 290 271 A1**
(43) Date of publication of application: **13.12.2023**
(21) Application number: 22749774.0
(22) Date of filing: 03.02.2022
(51) Int. Cl.: G01S 7/497

(54) **ABNORMALITY DETECTION DEVICE, ABNORMALITY DETECTION METHOD, AND PROGRAM**

(30) Priority: 03.02.2021 JP 2021015536
(71) Applicant: Pioneer Corporation, Tokyo 113-0021 (JP); Pioneer Smart Sensing Innovations Corporation, Tokyo 113-0021 (JP)
(72) Inventor: HOSOI Kenichiro, Kawagoe-shi, Saitama 350-8555 (JP); IWAI Tomoaki, Kawagoe-shi, Saitama 350-8555 (JP)
(74) Representative: Vossius & Partner Patentanwälte Rechtsanwälte mbB
(86) International application number: PCT/JP2022/004201
(87) International publication number: WO 2022/168903

(57) **Abstract**

A measurement device (10) includes a light source (110), a control unit (120), a light receiving unit (130), and a data generation unit (140). The control unit (120) repeatedly performs scanning with light from the light source (110) in a predetermined range. The light receiving unit (130) detects reflected light of the light of scanning by the control unit (120). The data generation unit (140) computes a distance to a reflection point of reflected light by using the reflected light. An abnormality detection unit (210) acquires measurement data generated by the data generation unit (140). Further, the abnormality detection unit (210) determines presence or absence of an abnormality of the control unit (120) by using at least one of a distance to the reflection point and intensity of the reflected light included in each of a plurality of pieces of the measurement data.

## Description

### TECHNICAL FIELD

The present invention relates to an abnormality detection device, an abnormality detection method, and a program that detect an abnormality of a measurement device.

### BACKGROUND ART

In recent years, usage of a measurement device for measuring a distance to a target object by an optical method has been spread. As a method of performing inspection of the measurement device as described above, for example, there is a method described in Patent Document 1. The method described in Patent Document 1 is a method of measuring misalignment of an optical axis of a measurement device, and describes using an optical axis adjustment device including a front plate and a rear plate. The front plate is located forward of the rear plate, and includes a hole for passing light irradiated from the measurement device.

### RELATED DOCUMENT

### PATENT DOCUMENT

Patent Document 1: Japanese Patent Application Publication No. 2020-56662

### SUMMARY OF INVENTION

### TECHNICAL PROBLEM

An optical measurement device includes a control unit that controls an irradiation direction of light. In a case where an abnormality has occurred in the control unit, the measurement device cannot control the irradiation direction of light. One example of a problem to be solved by the present invention is detecting an abnormality in a control unit that controls an irradiation direction of light in a measurement device using an optical method.

### SOLUTION TO PROBLEM

The invention described in claim 1 is directed to an abnormality detection device that detects an abnormality of a measurement device including
a light source,
a control unit that repeatedly performs scanning with light from the light source in a predetermined range,
a light receiving unit that detects reflected light of the light, and
a data generation unit that computes a distance to a reflection point of the reflected light by using the reflected light,
the abnormality detection device including
an abnormality detection unit that determines presence or absence of an abnormality of the control unit by using at least one of intensity of the reflected light and the distance.

The invention described in claim 10 is directed to an abnormality detection method of detecting an abnormality of a measurement device including
a light source,
a control unit that repeatedly scans an irradiation direction of light from the light source in a predetermined range,
a light receiving unit that detects reflected light of the light, and
a data generation unit that computes a distance to a reflection point of the reflected light by using the reflected light,
the abnormality detection method including,
by a computer,
determining presence or absence of an abnormality of the control unit by using at least one of intensity of the reflected light and the distance within one scan.

The invention described in claim 11 is directed to a program causing a computer to function as an abnormality detection device that detects an abnormality of a measurement device including
a light source,
a control unit that repeatedly scans an irradiation direction of light from the light source in a predetermined range,
a light receiving unit that detects reflected light of the light, and
a data generation unit that computes a distance to a reflection point of the reflected light by using the reflected light,
the program causing the computer to include
an abnormality detection function of determining presence or absence of an abnormality of the control unit by using at least one of intensity of the reflected light and the distance within one scan.

### BRIEF DESCRIPTION OF THE DRAWINGS

[Fig. 1] Fig. 1 is a diagram illustrating a configuration of an abnormality detection device according to an example embodiment together with a configuration of a measurement device.
[Fig. 2] Fig. 2 is a diagram illustrating one example of an irradiation range of light, when a control unit of the measurement device is operated normally.
[Fig. 3] Fig. 3 is diagram illustrating one example of measurement data, when the control unit of the measurement device is operated normally.
[Fig. 4] Fig. 4 is a diagram illustrating a first example of an irradiation range of light, when the control unit of the measurement device is abnormal.
[Fig. 5] Fig. 5 is a diagram illustrating one example of measurement data, when the measurement device is the state illustrated in Fig. 4.
[Fig. 6] Fig. 6 is a diagram illustrating a second example of an irradiation range of light, when the control unit of the measurement device is abnormal.
[Fig. 7] Fig. 7 is a diagram illustrating the second example of an irradiation range of light when the control unit of the measurement device is abnormal.
[Fig. 8] Fig. 8 is a diagram illustrating one example of measurement data, when the measurement device is the state illustrated in Fig. 6 or Fig. 7.
[Fig. 9] Fig. 9 is a diagram illustrating another condition for determining that the control unit of the measurement device is abnormal.
[Fig. 10] Fig. 10 is a diagram illustrating a hardware configuration example of the abnormality detection device.
[Fig. 11] Fig. 11 is a flowchart illustrating one example of processing to be performed by an abnormality detection unit.
[Fig. 12] Fig. 12 is diagram illustrating a modification example of Fig. 1.

### DESCRIPTION OF EMBODIMENTS

Hereinafter, an example embodiment according to the present invention is described with reference to the drawings. Note that, in all drawings, a similar constituent element is indicated by a similar reference sign, and description thereof is omitted as necessary.

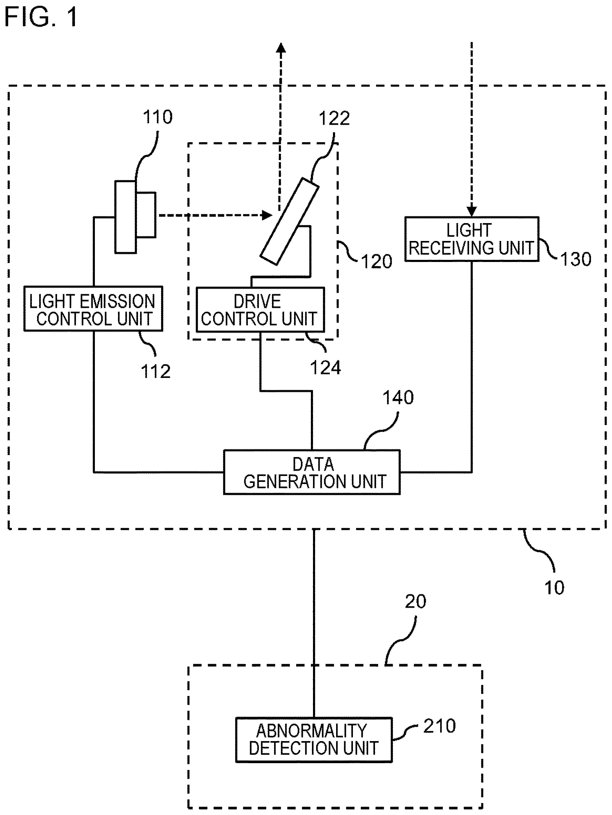

Fig. 1 is a diagram illustrating a configuration of an abnormality detection device 20 according to the example embodiment together with a configuration of a measurement device 10. The abnormality detection device 20 is a device for detecting an abnormality of a control unit 120 included in the measurement device 10.

First, a configuration of the measurement device 10 is described. The measurement device 10 includes a light source 110, a light emission control unit 112, the control unit 120, a light receiving unit 130, and a data generation unit 140.

The light source 110 includes, for example, a light emitting element such as a laser diode. The light emission control unit 112 controls light emission timing of the light source 110.

The control unit 120 controls an irradiation direction of light from the light source 110. Specifically, the control unit 120 includes a movable reflection unit 122 and a drive control unit 124. The movable reflection unit 122 reflects light from the light source 110. An orientation of the movable reflection unit 122 is variable. For example, the movable reflection unit 122 can control an irradiation direction of light two-dimensionally. The drive control unit 124 controls an orientation of the movable reflection unit 122. The movable reflection unit 122 includes, for example, a MEMS. In this case, the movable reflection unit 122 may be movable in two directions crossing each other. Further, the control unit 120 repeatedly perform scanning with light from the light source 110 in a predetermined range.

The light receiving unit 130 converts light (hereinafter, described as reflected light) acquired by reflection of light irradiated by the control unit 120 at a reflection point into an electrical signal. The electrical signal indicates, for example, intensity of the reflected light by a magnitude of a voltage value (or a current value).

The data generation unit 140 computes a distance from the measurement device 10 to a reflection point by using light emission timing of light by the light source 110, and light receiving timing of reflected light by the light receiving unit 130. Further, the data generation unit 140 generates measurement data. The measurement data includes information indicating an irradiation direction of light by the control unit 120, and a distance to a reflection point and intensity of reflected light in the direction.

Next, the abnormality detection device 20 is described. The abnormality detection device 20 includes an abnormality detection unit 210. The abnormality detection unit 210 acquires measurement data generated by the data generation unit 140. Further, the abnormality detection unit 210 determines presence or absence of an abnormality of the control unit 120 by using at least one of a distance to a reflection point and intensity of reflected light that are included in each of a plurality of pieces of the measurement data.

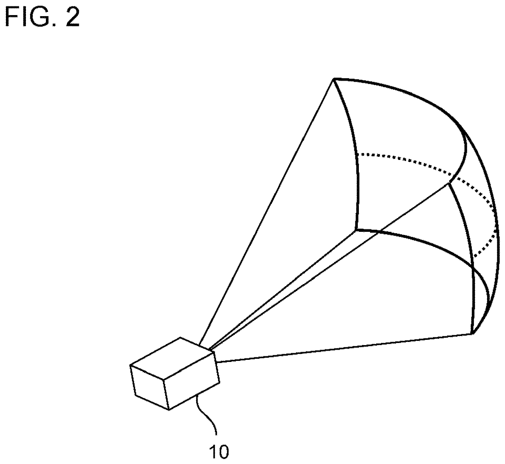

Fig. 2 is a diagram illustrating one example of an irradiation range of light, when the control unit 120 of the measurement device 10 is operated normally. As described above, the control unit 120 can control an irradiation direction of light two dimensionally (in a horizontal direction and in a vertical direction). Therefore, an irradiation range of light by the measurement device 10 is two-dimensional (hereinafter, described as a predetermined range). Further, the measurement device 10 repeatedly performs scanning with light in the predetermined range. At this occasion, the measurement device 10 irradiates light discretely. Further, measurement data are constituted of a plurality of pieces of pixel data. Herein, each of irradiation directions of a plurality of beams of light is equivalent to a pixel.

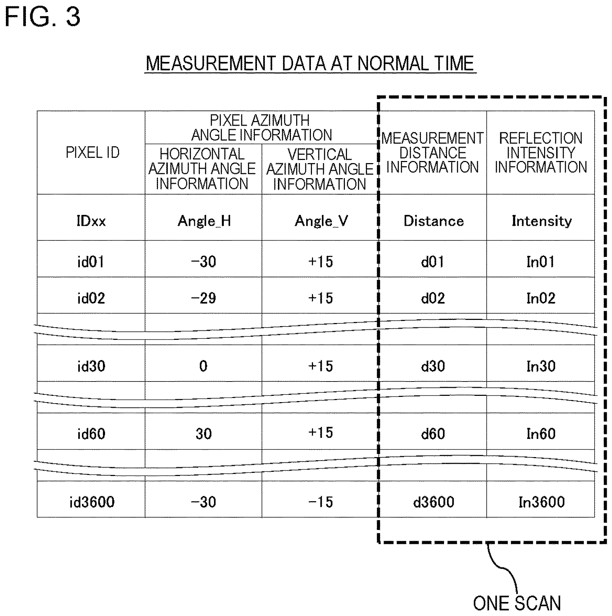

Fig. 3 is a diagram illustrating one example of measurement data, when the control unit 120 of the measurement device 10 is operated normally. Measurement data include, for each of a plurality of pixels, data (hereinafter, described as pixel azimuth information) indicating an irradiation direction of light, a distance from the measurement device 10 to a reflection point at the pixel, and intensity of reflected light received by the light receiving unit 130. Pixel azimuth information includes information (hereinafter, described as horizontal azimuth angle information) indicating an irradiation angle in the horizontal direction, and information (hereinafter, described as vertical azimuth angle information) indicating an irradiation angle in the vertical direction.

Further, it is often a case that a scanning range (the above-described predetermined range) of light by the measurement device 10 includes objects being different from each other (a case of persons is also included). Further, most of the objects have unevenness on a surface thereof. Therefore, in most cases, at least one of intensity of reflected light and the above-described distance at at least one pixel within one scan has a different value from the at least one of the intensity of reflected light and the above-described distance at the remaining pixels.

Further, in a case where the measurement device 10 is moving, and in a case where a moving object such as a person or a vehicle comes and goes in a measurement range of the measurement device 10, when measurement data acquired by scanning at first timing, and measurement data acquired by scanning at second timing are compared with each other, at least one of intensity of reflected light and the above-described distance at at least one pixel has a different value from the at least one of the intensity of reflected light and the above-described distance at the remaining pixels.

Further, the abnormality detection unit 210 of the abnormality detection device 20 determines presence or absence of an abnormality of the control unit 120 by using at least one of intensity of reflected light and a distance within one scan. Further, the abnormality detection unit 210 determines presence or absence of an abnormality of the control unit 120 by comparing pieces of measurement data acquired by each of a plurality of scans. Hereinafter, these specific examples are described.

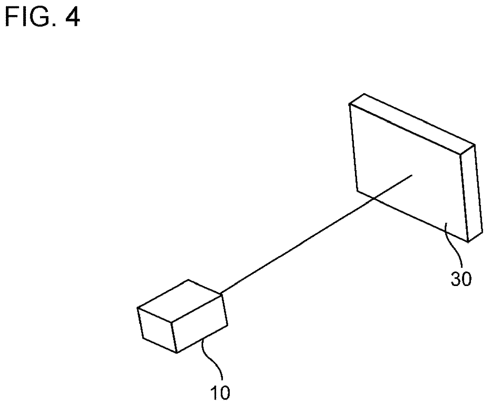

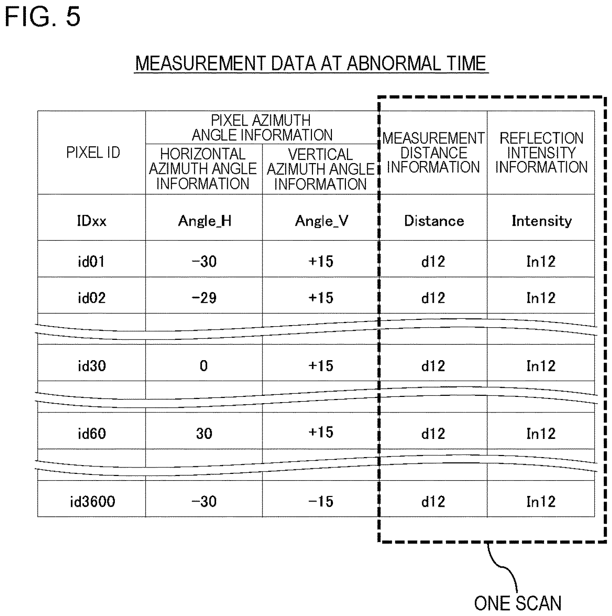

Fig. 4 is a diagram illustrating a first example of an irradiation range of light, when the control unit 120 of the measurement device 10 is abnormal. Fig. 5 is a diagram illustrating one example of measurement data, when the measurement device 10 is the state illustrated in Fig. 4.

In a case where the control unit 120 of the measurement device 10 cannot change an irradiation direction of light at all (e.g., in a case where the movable reflection unit 122 cannot be moved in either of the horizontal direction or the vertical direction), the irradiation direction of light from the measurement device 10 is fixed to a certain direction, regardless that the drive control unit 124 attempts scanning with the irradiation direction of light in two-dimensions. In this case, as illustrated in Fig. 4, at least one (in the example in Fig. 4, both) of intensity of reflected light and the above-described distance within one scan has a substantially same value at all pixels. In view of the above, the abnormality detection unit 210 of the abnormality detection device 20 determines that the control unit 120 is abnormal, when a variation of at least one of a distance and intensity of reflected light within one scan lies within a first reference range. Herein, a "variation" is, for example, a difference between a maximum value and a minimum value, but may be indicated by another statistical index.

Note that, there is a case that the abnormality detection unit 210 may determine that the control unit 120 is abnormal, when all values within one scan lie within a second reference range in at least one (including a case of both) of a distance and intensity of reflected light. Such a case is, for example, a case in which the measurement device 10 is fixed, and a distance and intensity of reflected light are known in a case where the irradiation direction of the measurement device 10 is fixed to a certain direction. Further, the second reference range is set in such a way as to include the known value.

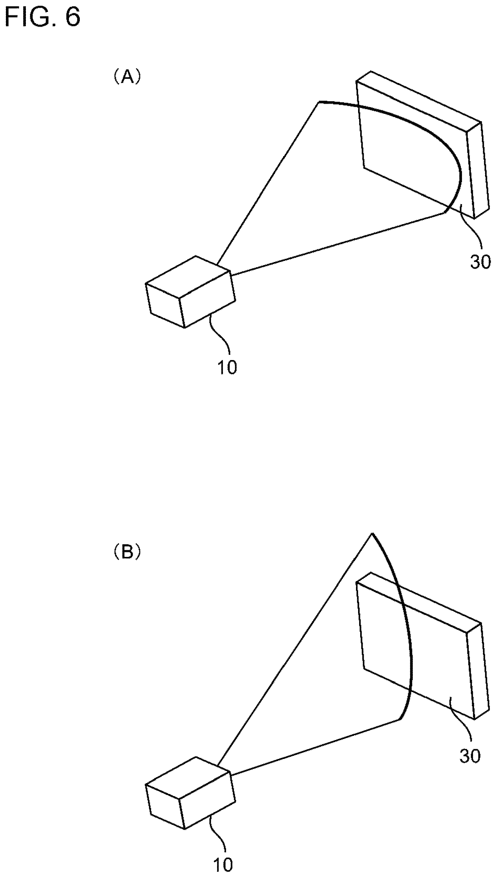

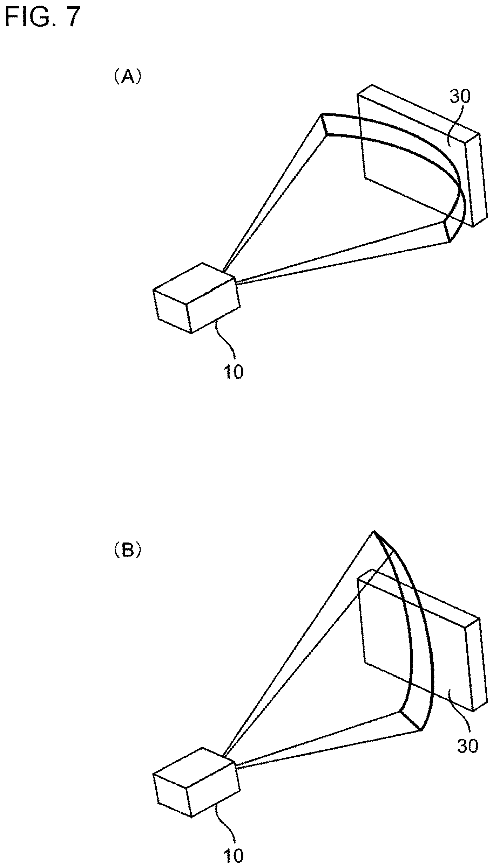

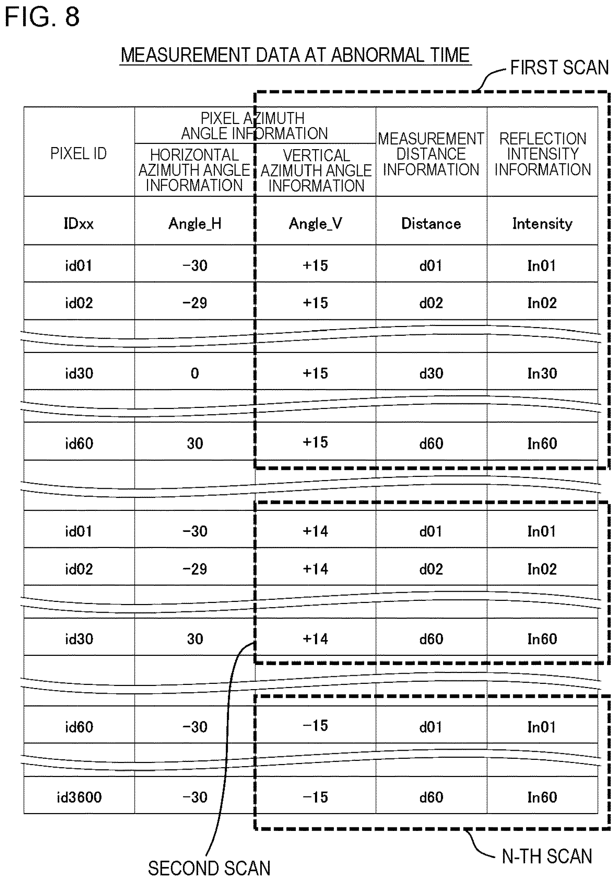

Figs. 6 and 7 are diagrams illustrating a second example of an irradiation range of light, when the control unit 120 of the measurement device 10 is abnormal. Fig. 8 is a diagram illustrating one example of measurement data, when the measurement device 10 is the state illustrated in Fig. 6 or Fig. 7.

There is also a case that the control unit 120 of the measurement device 10 can control the irradiation direction of light only in the horizontal direction (equivalent to Fig. 6(A)) or in the vertical direction (equivalent to Fig. 6(B)). Further, in the control unit 120, a scanning range of light may be narrow in the vertical direction (equivalent to Fig. 7(A)) or in the horizontal direction (equivalent to Fig. 7(B)). In such a case, as illustrated in Fig. 8, when pieces of measurement data are compared between each of a plurality of scans, these pieces of the measurement data are similar to each other (or are almost the same). In other words, pieces of similar measurement data are repeatedly acquired. In view of the above, the abnormality detection unit 210 of the abnormality detection device 20 determines that the control unit 120 is abnormal, when a difference of measurement data between each of a plurality of scans lies within a third reference range.

More specifically, in the example illustrated in Fig. 6, while a distance and intensity change only in the horizontal direction (equivalent to Fig. 6(A)) or in the vertical direction (equivalent to Fig. 6(B)) in pieces of measurement data acquired by each scan, a distance and intensity have almost the same value in the vertical direction (equivalent to Fig. 6(A)) or in the horizontal direction (equivalent to Fig. 6(B)) (in other words, a variation is within the first reference range). A configuration as described above may also be included in a condition for determining that the control unit 120 is abnormal.

Further, in the example illustrated in Fig. 7, while a distance and intensity greatly change in the horizontal direction (equivalent to Fig. 7(A)) or in the vertical direction (equivalent to Fig. 7(B)) in pieces of measurement data acquired by each scan, a distance and intensity hardly change in the vertical direction (equivalent to Fig. 6(A)) or in the horizontal direction (equivalent to Fig. 6(B)) (in other words, a variation is within a fourth reference range being wider than the first reference range). A configuration as described above may also be included in the condition for determining that the control unit 120 is abnormal.

Note that, measurement data acquired by one scan indicates a distribution of intensity of reflected light and a distance. Therefore, it can also be said that the abnormality detection unit 210 determines that the control unit is abnormal, when a comparison result of the distribution between each of a plurality of scans satisfies a criterion.

Note that, in the examples illustrated in Figs. 4 to 8, in a case where a distance indicated by measurement data is equal or less than a reference value (e.g., equal to or less than 1 m, preferably equal to or less than 50 cm, and more preferably equal to or less than 20 cm), the abnormality detection unit 210 does not determine that the control unit 120 is abnormal, even when the above-described condition is satisfied. This is because, in a case where a target object constituting a reflection point is proximate to the measurement device 10, the entirety of an irradiation range of light by the measurement device 10 may be occupied by the same target object. In this case, even when the control unit 120 is normal, measurement data may satisfy the above-described condition.

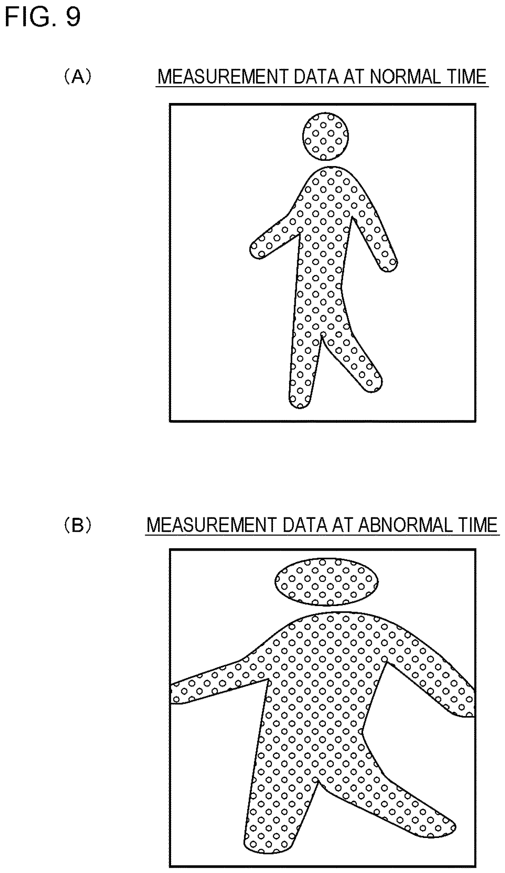

Fig. 9 is a diagram illustrating another condition for determining that the control unit 120 of the measurement device 10 is abnormal. When measurement data are processed, it is possible to presume an outer shape and a type of a target object including a reflection point by using a distribution of a distance. The control unit 120 determines presence or absence of an abnormality of the control unit by using a presumption result on the type, and a shape of the target object presumed based on the distribution of the distance.

For example, Fig. 9(A) illustrates an outer shape of a target object (in this example, a person) in a case where the control unit 120 is in a normal state. On the other hand, in a case where the control unit 120 is the state in Fig. 7(B), the outer shape of the target object is distorted into a shape extending in the horizontal direction. In view of the above, the control unit 120 retains outer shape information indicating an outer shape serving as a reference, for each type of target object. Further, the control unit 120 compares the outer shape of the target object indicated by measurement data with the outer shape information for each type, and determines a type having a most similar shape. Further, the control unit 120 determines a distortion of the outer shape of the target object indicated by the measurement data with respect to the outer shape information of the determined type, and determines presence or absence of an abnormality of the control unit 120, and the type of the abnormality by using presence or absence of the distortion, and a direction of the distortion. Specifically, in a case where an outer shape of a target object is distorted into a shape extending in the horizontal direction, the control unit 120 determines that a scanning range of light is narrowed in the horizontal direction (equivalent to Fig. 7(B)). Further, in a case where an outer shape of a target object is distorted into a shape extending in the vertical direction, the control unit 120 determines that a scanning range of light is narrowed in the vertical direction (equivalent to Fig. 7(B)).

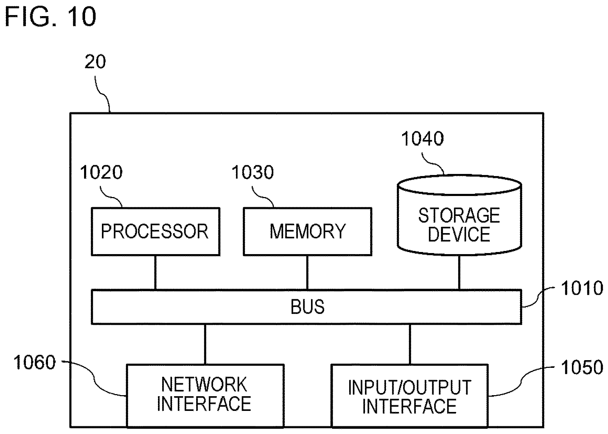

Fig. 10 is a diagram illustrating a hardware configuration example of the abnormality detection device 20. The abnormality detection device 20 includes a bus 1010, a processor 1020, a memory 1030, a storage device 1040, an input/output interface 1050, and a network interface 1060.

The bus 1010 is a data transmission path along which the processor 1020, the memory 1030, the storage device 1040, the input/output interface 1050, and the network interface 1060 mutually transmit and receive data. However, a method of mutually connecting the processor 1020 and the like is not limited to bus connection.

The processor 1020 is a processor to be achieved by a central processing unit (CPU), a graphics processing unit (GPU), or the like.

The memory 1030 is a main storage device to be achieved by a random access memory (RAM) or the like.

The storage device 1040 is an auxiliary storage device to be achieved by a hard disk drive (HDD), a solid state drive (SSD), a memory card, a read only memory (ROM), or the like. The storage device 1040 stores a program module achieving the abnormality detection unit 210. The processor 1020 achieves each function associated with each program module by reading the program module in the memory 1030 and executing the read program module.

The input/output interface 1050 is an interface for connecting the abnormality detection device 20 and various pieces of input/output equipment with each other. For example, the abnormality detection device 20 communicates with the measurement device 10 via the input/output interface 1050.

The network interface 1060 is an interface for connecting the abnormality detection device 20 to a network. The network is, for example, a local area network (LAN) or a wide area network (WAN). A method of connecting the network interface 1060 to the network may be wireless connection, or may be wired connection. The abnormality detection device 20 may communicate with the measurement device 10 via the network interface 1060.

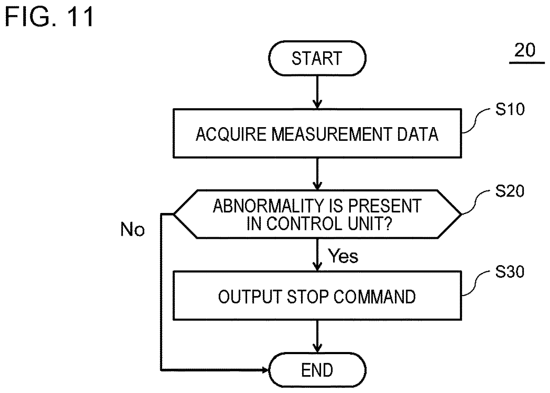

Fig. 11 is a flowchart illustrating one example of processing to be performed by the abnormality detection unit 210. The measurement device 10 generates measurement data, for example, each time one scan is finished, and outputs the generated measurement data to the abnormality detection device 20. Further, when the abnormality detection unit 210 of the abnormality detection device 20 acquires the measurement data from the measurement device 10 (step S10), the abnormality detection unit 210 determines whether an abnormality has occurred in the control unit 120 of the measurement device 10 by processing the acquired measurement data (step S20). Further, when it is determined that an abnormality has occurred (step S20: Yes), the control unit 120 outputs a stop command to the measurement device 10 (step S30). Then, the measurement device 10 stops measurement. Note that, in step S30, warning information may be output, in place of outputting a stop command.

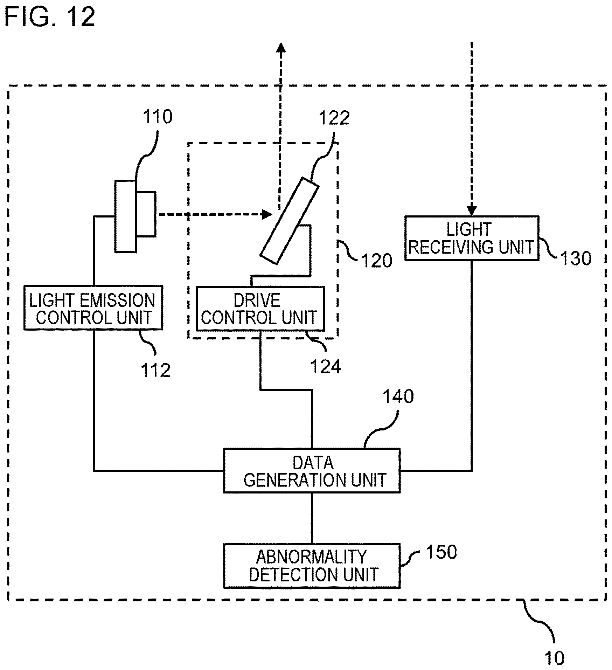

Fig. 12 is a diagram illustrating a modification example of Fig. 1. In the example illustrated in Fig. 12, the abnormality detection device 20 is not provided, and instead, the measurement device 10 includes an abnormality detection unit 150. A function of the abnormality detection unit 150 is similar to the function of the abnormality detection unit 210. In other words, the light source 110, the control unit 120, the light receiving unit 130, the data generation unit 140, and the abnormality detection unit 150 are included in one device.

As described above, according to the present example embodiment, the abnormality detection unit 210 of the abnormality detection device 20 (or the abnormality detection unit 150 of the measurement device 10) can determine whether an abnormality has occurred in the control unit 120 by using at least one of intensity of reflected light and a distance to a reflection point that are included in measurement data of the measurement device 10.

In the foregoing, an example embodiment according to the present invention has been described with reference to the drawings, but these are an example of the present invention, and various configurations other than the above can also be adopted.

This application is based upon and claims the benefit of priority from Japanese patent application No. 2021-015536, filed on February 3, 2021, the disclosure of which is incorporated herein in its entirety by reference.

### REFERENCE SIGNS LIST

- 10: Measurement device
- 20: Abnormality detection device
- 110: Light source
- 120: Control unit
- 122: Movable reflection unit
- 124: Drive control unit
- 130: Light receiving unit
- 140: Data generation unit
- 210: Abnormality detection unit

## Claims

1. An abnormality detection device that detects an abnormality of a measurement device comprising
a light source,
a control unit that repeatedly performs scanning with light from the light source in a predetermined range,
a light receiving unit that detects reflected light of the light, and
a data generation unit that computes a distance to a reflection point of the reflected light by using the reflected light,
the abnormality detection device comprising
an abnormality detection unit that determines presence or absence of an abnormality of the control unit by using at least one of intensity of the reflected light and the distance.

2. The abnormality detection device according to claim 1, wherein
the abnormality detection unit determines presence or absence of an abnormality of the control unit by using at least one of the intensity of the reflected light and the distance within one scan.

3. The abnormality detection device according to claim 2, wherein
the abnormality detection unit determines that the control unit is abnormal, when a variation of the at least one within one scan lies within a reference range.

4. The abnormality detection device according to claim 3, wherein
it is determined that the control unit is abnormal, when the variation of both of the intensity of the reflected light and the distance lies within a reference range.

5. The abnormality detection device according to any one of claims 2 to 4, wherein
the abnormality detection unit determines that the control unit is abnormal, when all values within one scan lie within a reference range, in at least one of the intensity of the reflected light and the distance.

6. The abnormality detection device according to any one of claims 1 to 5, wherein
the abnormality detection unit
determines a distribution of at least one of the intensity of the reflected light and the distance in each of a plurality of the scans, and
determines presence or absence of an abnormality of the control unit by using a comparison result of the distribution between each of the plurality of the scans.

7. The abnormality detection device according to any one of claims 1 to 6, wherein
the abnormality detection unit does not determine that the control unit is abnormal, in a case where the distance is equal to or less than a reference value.

8. The abnormality detection device according to any one of claims 1 to 7, further comprising
a type presumption unit that presumes a type of a target object having a reflection point by using a distribution of the distance, wherein
the abnormality detection unit determines presence or absence of an abnormality of the control unit by using a presumption result on the type, and a shape of the target object presumed based on a distribution of the distance.

9. The abnormality detection device according to any one of claims 1 to 8, further comprising:
the light source; the control unit; the light receiving unit; and the data generation unit.

10. An abnormality detection method of detecting an abnormality of a measurement device comprising
a light source,
a control unit that repeatedly scans an irradiation direction of light from the light source in a predetermined range,
a light receiving unit that detects reflected light of the light, and
a data generation unit that computes a distance to a reflection point of the reflected light by using the reflected light,
the abnormality detection method comprising,
by a computer,
determining presence or absence of an abnormality of the control unit by using at least one of intensity of the reflected light and the distance within one scan.

11. A program causing a computer to function as an abnormality detection device that detects an abnormality of a measurement device comprising
a light source,
a control unit that repeatedly scans an irradiation direction of light from the light source in a predetermined range,
a light receiving unit that detects reflected light of the light, and
a data generation unit that computes a distance to a reflection point of the reflected light by using the reflected light,
the program causing the computer to comprise
an abnormality detection function of determining presence or absence of an abnormality of the control unit by using at least one of intensity of the reflected light and the distance within one scan.
